# EUROPEAN PATENT APPLICATION

(11) **EP 2 455 178 A1**
(43) Date of publication of application: **23.05.2012**
(21) Application number: 10799832.0
(22) Date of filing: 13.07.2010
(51) Int. Cl.: B23K 20/12, B23K 26/00, C21D 1/09

(54) **ROTARY TOOL FOR FRICTION STIR WELDING**

(30) Priority: 14.07.2009 JP 2009165228
(71) Applicant: Fuji Jukogyo Kabushiki Kaisha, Tokyo 160-8316 (JP)
(72) Inventor: ADACHI Takafumi, Tokyo 160-8316 (JP); TAKEHISA Hiroyuki, Tokyo 160-8316 (JP); SANO Yuji, Tokyo 105-0023 (JP); CHIDA Itaru, Tokyo 105-0023 (JP)
(74) Representative: Staudt, Hans-Peter
(86) International application number: PCT/JP2010/061827
(87) International publication number: WO 2011/007774

(57) **Abstract**

The object of the invention is to provide a rotary tool for friction stir welding having an excellent abrasion resistance and durability, which can attain an excellent joint characteristics. In a rotary tool 10 for friction stir welding, a shoulder portion 11 has an end surface 13 from which a prove pin 20 protrudes. The outer periphery of the prove pin 20 has a connection 15 linked to the end surface 13 of the shoulder portion 11. Pulse laser peening is applied to a base side region 22, that extends from the connection 15 to the screw part 23a. The prove pin, which is repetitiously exposed to compression load and tensile load during the friction stir welding, can maintain the surface rigidity and the toughness. The durability of the prove pin is greatly improved with the damages due to buckling or thermal deformation being restricted.

## Description

### Field of the Invention

The present invention relates to a rotary tool for friction stir welding used for subjecting workpieces to be connected made from metal materials such as aluminum alloy, magnesium alloy, copper alloy, and titanium alloy to friction stir welding, and particularly to a rotary tool for friction stir welding having an excellent durability by which a high-quality friction stir welding can be performed.

### Background Art

Hitherto, workpieces to be connected made from metal materials such as aluminum alloy, magnesium alloy, copper alloy, and titanium alloy are connected with each other by a method including a mechanical bonding by use of a bolt or a rivet, or resistance spot welding, arc welding, or gas welding. The resistance spot welding, arc welding, gas welding and the like are widely used since products obtained thereby have lighter weight, the process numbers are smaller, and the devices are relatively simple, compared to compared to the mechanical bonding by use of bolts or rivets. By these welding processes, however, the parts to be connected are heated almost to melting temperatures of the materials. Therefore, it is possible that the workpieces are thermally affected to have connection failure in various ways due to thermal deformation, hardening, residual stress, brittleness, or oxidation.

Therefore, a friction stir welding method has been proposed, for connecting workpieces to each other by friction stir, as a replacement of the welding.

Fig. 8 is a perspective view for showing an end portion of a rotary tool for friction stir welding as an embodiment, which is to be used for the friction stir welding.
Fig. 9 is a diagram for showing the friction stir welding method.

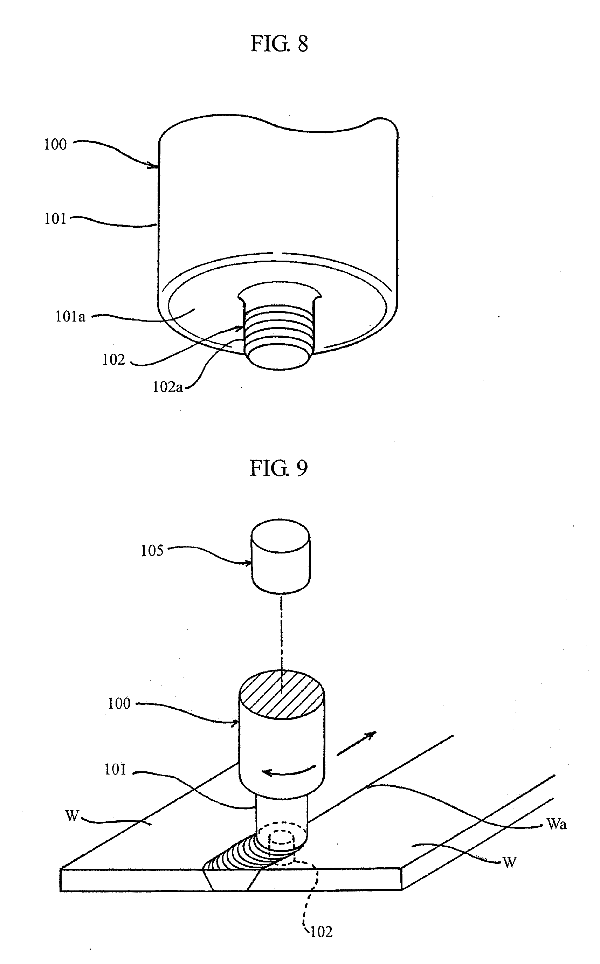

As shown in Fig. 8, a rotary tool 100 for friction stir welding has a column shape having a shoulder portion 101 in the form of a column at an end. A prove pin 102 is protruded from an end surface 101a of the shoulder portion 101. Further, a screw part 102a is prepared around the outer periphery at the end of the prove pin 102. As shown in Fig. 9, the prove pin 102, which is protruded from the end surface 101a of the shoulder portion 101, is pressed into an interface Wa between workpieces to be welded (welding workpieces) W which are adjacent to each other, with the rotary drive apparatus 105 being driven. Then, the end surface 101a of the shoulder portion 101 is brought into contact with the surface of the workpieces. In this state, the rotary tool 100 for friction stir welding is moved along the interface Wa between the welding workpieces W. Thus, the workpieces are connected with each other along the interface Wa.

More specifically, by use of the rotary tool 100 for friction stir welding, the welding workpieces W are subjected to plastic fluidization by the heat generated by friction between the shoulder portion 101/ the prove pin 102 which rotate at a high speed and the welding workpieces W. The welding workpieces W in the fluidized state are stirred at the interface Wa by the screw part 102a provided around the outer periphery of the prove pin 102. Thereafter, the portion is cooled to connect the welding workpieces W to each other at the interface.

When the welding workpieces are connected with each other by the friction stir welding as discussed above, it is possible to connect the welding workpieces W with each other at a temperature lower than that in the conventional welding. By the friction stir welding, a uniform joint/connection can be obtained entirely over the interface Wa, and different kinds of materials can be easily connected to each other. In general, steel for a hot working tool is used as a material for preparing the shoulder portion 101 and the prove pin 102 in the rotary tool 100 for friction stir welding.

When the welding workpieces W is fluidized by heat of friction obtained by the rotary tool 100 for friction stir welding being rotated at a high speed, the prove pin 102 being pressed into the interface Wa between the welding workpieces, and the end surface 101a of the shoulder portion 101 contacting the welding workpieces W, the fluidized workpieces may fused to the shoulder portion 101 and the prove pin 102. In such a case, the resistance to stirring becomes larger, which can be a reason for damaging the prove pin. Moreover, when the shoulder portion 101 and the prove pin 102 are exposed to a high temperature, prove pin 102 is largely abraded, and decreases the strength. There is a concern that the prove pin 102, under repetitions application of tension and compression load, is subjected to buckling or breakage, and that the interface Wa between the welded workpieces W is thermally deformed.

When the prove pin or the like in the rotary tool for friction stir welding is broken/damaged, it is possible that the welding workpieces are damaged and that the operator would be in danger. As a countermeasure for preventing the rotary tool for friction stir welding from being damaged, there are various methods, for instance, the rotary tool for friction stir welding is designed to have a shaft with an increased diameter and a stress concentration part with an increased curvature, and a material with a high strength is chosen for the rotary tool for friction stir welding. On the other hand, it is necessary to confirm whether the rotary tool with above-mentioned modification has shortcomings, which requires a large cost and time. Further, the joint characteristics by the rotary tool may be affected by the modification. In addition to the above, it is possible to give a longer life to the rotary tool by simplifying the shape of the screw or the like. By the simplification however, excellent joint characteristics cannot be attained.

Accordingly, Patent Literature 1 proposes a rotary tool for friction stir welding wherein abrasion or breakage/damages on the shoulder portion and the prove pin is minimized and the thermal influence on the welding workpieces is restricted.

The rotary tool for friction stir welding disclosed in Patent Literature 1 includes a prove pin or a shoulder portion prepared from WC-based ultrahard metal alloy comprising 5 to 18 parts by weight of Co, which is configured to contact the welding workpieces. This rotary tool for friction stir welding is rotated at a high speed, the prove pin is pressed into the interface between the welding workpieces, with the end surface of the shoulder portion being contacted with the welding workpieces W. Then, the welding workpieces are plastically fluidized by heat of friction, and hence the welding workpieces are connected to each other.

### Prior Art literature

### Patent Literature

Patent Literature 1: JP-A 2005-199281

### Summary of the Invention

### Problems to be solved by the Invention

In the rotary tool for friction stir welding disclosed in Patent Literature 1, the prove pin and the shoulder portion prepared from the WC-based ultrahard metal alloy have small toughness, even with an excellent abrasion resistance, which is concerned about being damaged by the repetitious application of tension and compression load during the use.

Moreover, the rotary tool for friction stir welding having the prove pin and the shoulder portion prepared from the WC-based ultrahard metal alloy can be costly manufactured, and hence the products which has been connected by using the rotary tool for friction stir welding can be also expensive.

On the other hand, there is a measure for increasing fatigue strength of steel materials at a portion repetitiously receiving a load, by imparting a residual compression stress by shot peening or by increasing the rigidity on the surface of the material. In the shot peening, small steel balls are blown to a targeted surface of the steel material to give a plastic deformation thereto. Accordingly, residual compression stress is imparted to the surface.

In accordance with the shot peening, residual compression stress can be imparted to a prove pin used for a rotary tool for friction stir welding prepared from a relatively cheap steel used as a hot working tool or heat-resistant metal alloy. Consequently, a rotary tool for friction stir welding having an excellent durability may be cheaply fabricated. However, when the shot peening is carried out by blowing small steel balls or the like to the surface of the material, the blown region can be broad, and the prove pin or the end surface of the shoulder potion can be made rough by shot marks. The irregularity with the shot marks can be a source of fatigue, which may lead to the decrease of fatigue characteristics. Furthermore, the prove pin or the shoulder portion, especially the screw part formed around the outer periphery of the prove pin at the free end thereof is affected, and the surface profile accuracy is lowered. Due to the decrease in the surface profile accuracy, the friction stir resistance between the prove pin/the end surface of the shoulder portion and the welding workpieces can be increased and the joint characteristics can be decreased, when the workpieces are connected.

The residual compression stress is extremely shallowly applied by the shot peening, and it is difficult to maintain the residual compression stress sufficient to improve fatigue characteristics. Further, since steel balls cannot be brown precisely to a small area by shot peening, it is difficult to treat a rotary tool with the shot peening, which is for friction stir welding having a small prove pin which requires a good surface profile accuracy.

On the other hand, pulse laser peening was developed, as a method for imparting residual compression stress to a region nearby the surface of the metal substance, recently. It is possible to control a pulse laser beam irradiation spot at a high accuracy, compared to shot peening. Namely, the pulse laser peening is appropriately used for selectively imparting residual compression stress to a small area. Further, the pulse laser peening is applicable to mechanical parts which have a small surface profile change by the use and which requires a good surface profile accuracy. By the pulse laser peening, it is possible to impart a residual compression stress more deeply, or control the depth of the residual compression stress, by adjusting the condition for irradiating the pulse laser beam such as pulse energy, spot size, pulse irradiation number of the like.

It is therefore an object of the present invention is to provide a rotary tool for friction stir welding having excellent abrasion resistance and durability, and excellent joint characteristics.

### Means for solving the problems

The above-mentioned object is solved by the invention as claimed in Claim 1, that is a rotary tool for friction stir welding comprising a shoulder portion, and a prove pin protruded from an end surface of the shoulder portion, the prove pin having a screw part around the outer periphery at the side of the free end. The prove pin is rotated is pressed into an interface between workpieces to be welded to each other, moved along the interface, and the workpieces to be welded is subjected to friction stir welding at the interface. The rotary tool for friction stir welding is **characterized in that** the outer periphery of the prove pin has been treated by pulse laser peening.

According to the invention, it is made possible to selectively impart a compression residual stress to a small region in the outer periphery of the prove pin under repetitious tense and compressive load stress. In other words, the prove pin can maintain the surface profile accuracy because the surface profile change is small. Moreover, the pulse laser peening makes it possible to impart the residual compression stress and the increased rigidity deeply to the prove pin. Therefore, it is possible to restrict the crack generation applied to the prove pin, which repetitiously repeat tension and compression stress by the friction stir welding. Hence, the durability of the prove pin is largely improved with the buckling and damages being restricted.

The invention as claimed in Claim 2 is **characterized in that** the outer periphery of the prove pin, which is in the rotary tool for friction welding as claimed in Claim 1, has a connection linked to the end surface of the shoulder portion, the pulse laser peening has been applied to a base side region extending from the connection to the screw part.

According to the invention, the base side region of the prove pin, to which tension and compression stress are repeatedly and intensively applied at the friction stir welding, is treated by the above-mentioned pulse laser peening. Therefore, particularly the base side region of the prove pin to which residual compression stress is intensively imparted maintains the toughness, and the damages due to the buckling or thermal deformation of the prove pin are restricted. As a result, the durability of the prove pin is greatly improved.

The invention as claimed in Claim 3 is **characterized in that** the pulse laser peening imparts a residual compression stress to the base side region of the prove pin, which is greater than the tensile stress and is smaller than the compressive yield stress applied to the rotary tool for friction stir welding at a maximum temperature during the use, in the rotary tool for friction stir welding as claimed in Claim 1 or 2.

According to the invention, the residual compression stress applied by the pulse laser peening is controlled to be greater than the tensile stress and smaller than the compressive yield stress applied to the rotary tool for friction stir welding at a maximum temperature during the use. By the control, the toughness of the prove pin is securely maintained, the damages due to buckling or thermal deformation thereof is restricted, and the durability there of is largely improved.

### Effect of the Invention

According to the invention, pulse laser peeing is applied to the prove pin to which tension or compression stress is repeatedly imparted in the friction stir welding. Because of the treatment, the surface rigidity and the toughness of the prove pin are maintained, the damages from buckling or thermal deformation are restricted, and the durability of the prove pin is largely improved. Moreover, excellent joint characteristics can be obtained, without damaging the surface profile accuracy of the prove pin.

### Brief Explanation of the Drawings

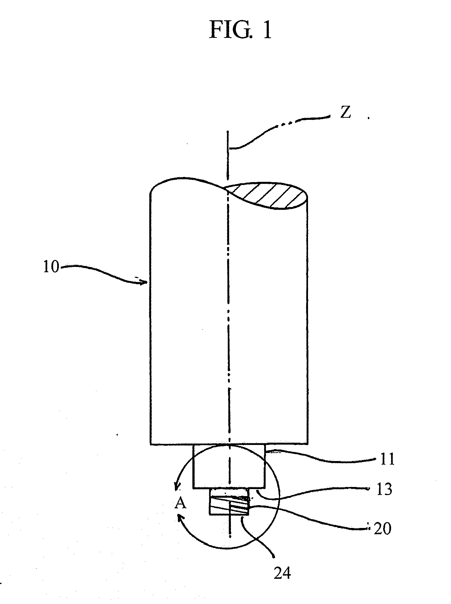

[Fig. 1] Fig. 1 is a schematic side view of a rotary tool for friction stir welding as an embodiment of the present invention.

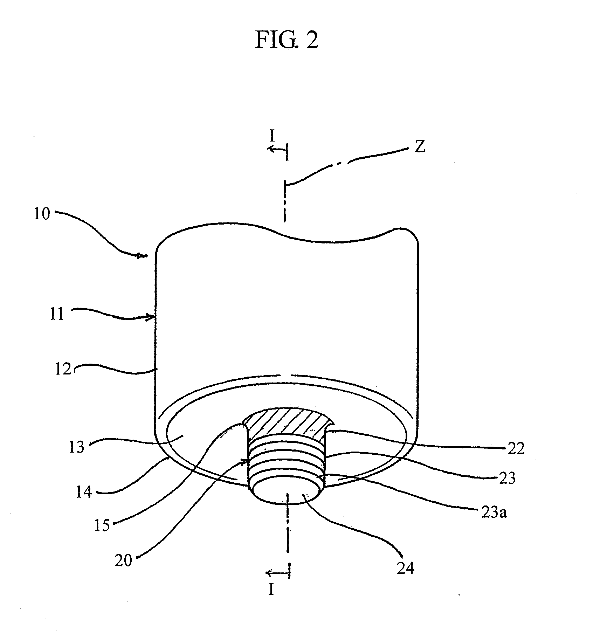

[Fig. 2] Fig. 2 is a perspective view of portion A in Fig. 1.

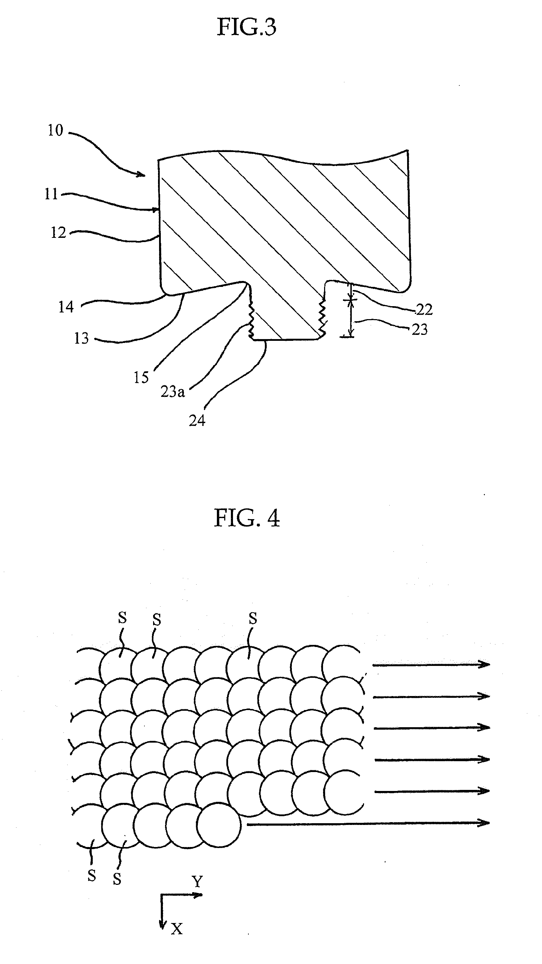

[Fig. 3] Fig. 3 is a cross-section viewed at I-I line in Fig. 2.
[Fig. 4] Fig. 4 is a view for explaining the outline of pulse laser peening treatment.

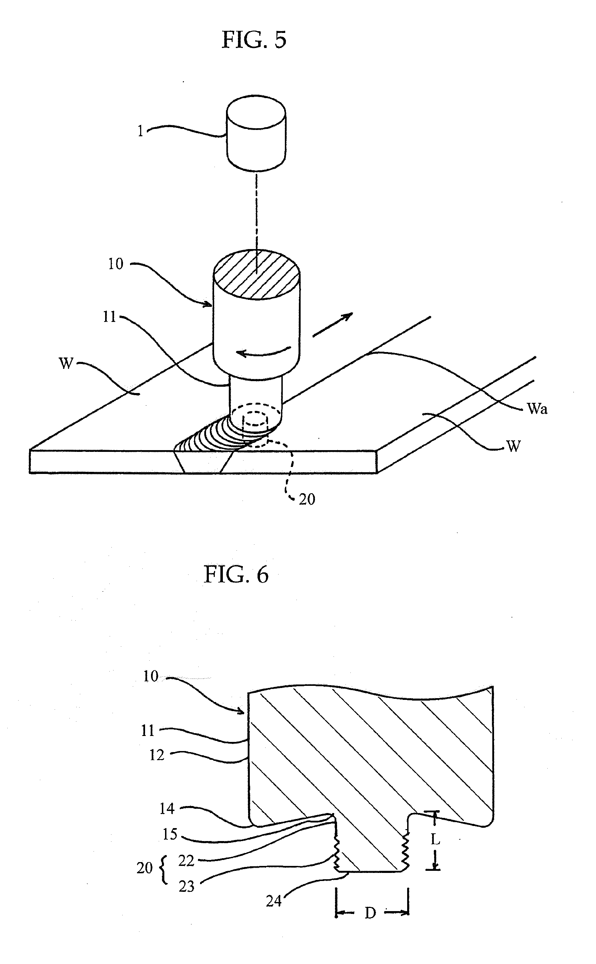

[Fig. 5] Fig. 5 is a diagram for explaining the outline of friction stir welding.
[Fig. 6] Fig. 6 is a schematic diagram for showing a rotary tool for friction stir welding in the example.

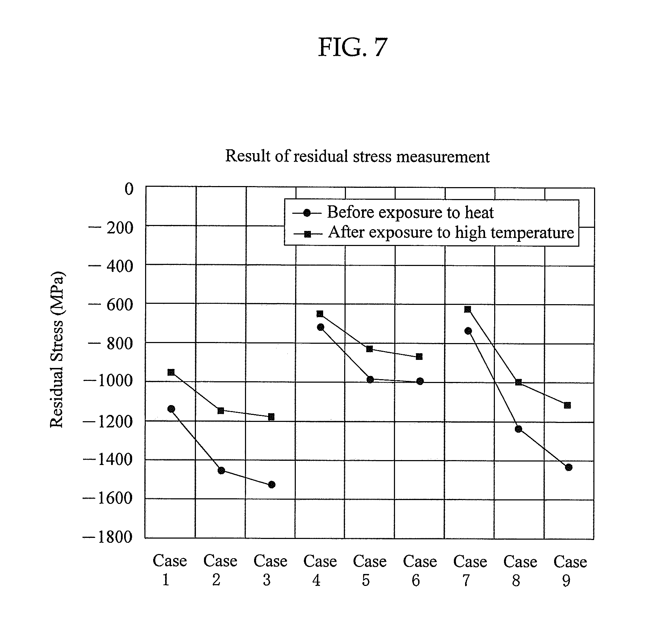

[Fig. 7] Fig. 7 is a diagram for showing the result of the residual stress measurement in the example.
[Fig. 8] Fig. 8 is a schematic diagram for explaining a conventional rotary tool for friction stir welding.
[Fig. 9] Fig. 9 is a schematic diagram for explaining a conventional friction stir welding.

### Embodiment for carrying out the invention

Embodiments of the rotary tool for friction stir welding of the present invention will now be explained by referring to Figs. 1 to 5.

Fig. 1 is a schematic side view of a rotary tool for friction stir welding as an embodiment of the present invention; Fig. 2 is a perspective view of portion A in Fig. 1; and Fig. 3 is a cross-section viewed at I-I line in Fig. 2.

Fig. 1 shows that the rotary tool 10 for friction stir welding is driven by a rotary drive apparatus such as an induction motor (not shown) to rotate around an axis Z. The rotary tool 10 is in the form of a column made of a steel for a hot working tool. The rotary tool 10 has a shoulder portion 11 in the form of a column at the end thereof. A shoulder pin 20 is formed on an end surface 13 of the shoulder portion 11, which protrudes from the center of the end surface 13 and extends along the axis Z.

Figs. 2 and 3 show that the end surface 13 of the shoulder portion 11 is in the form of a reversed corn having a center concaved in the direction of the base part. From the most deeply concaved center part, a prove pin 20 extends to its end along the axis Z. A round corner 14 smoothly extending from an outer periphery 12 of the shoulder portion 11 to the end surface 13 is in the form of an arc. In other words, a so-called corner R is formed. Moreover, a connection 15 through which the end surface 13 extend to the base part of the prove pin 20 is also in the form of arc. Namely, a so-called corner R is formed.

The prove pin 20 is in the form of a column. The prove pin 20 has a base side region 22 extending from the outer periphery which has a cross section in the form of a perfect circle, and a free end region 23 having a spiral-shaped screw part 23 a.

In the thus formed rotary tool 10 for friction stir welding, the shoulder portion 11 and the prove pin 20, to which tension and compression stress are repeatedly applied under use, particular the surface of the base side region 22 extending from the connection 15 to the screw part 23a are treated with pulse laser peening, in the present embodiment. Herein, the connection 15 is a part integral with the end surface 13 of the shoulder portion 11 which receives intensive stress application.

The pulse laser peening is applied to a surface of the base side region 22 (shown by hatching in Fig. 2) in the prove pin 20 including the connection 15 linked to the end surface 13 of the shoulder portion 11 of the rotating rotary tool 10 of friction stir welding, for instance, by rotatingly driving the rotary tool 10 for friction stir welding around the axis Z. Fig. 4 is a magnification of an essential part, which shows that the pulse laser beam is converged and irradiated to the above-mentioned surface. With respect to the scanning direction Y, a circumferential direction where the rotary tool 10 for friction stir welding rotates, the pulse laser peening is carried out with beam sports S being shifted in the direction X, i.e., from a base of the prove pin 20 to an end 24 thereof. The beam sports S are created so as to be superimposed one on another by applying a pulse laser beam to the prove pin with the scanning in the direction Y. In this case, the adjacent beam sports S are arranged to be superimposed with each other also in the direction X. In this way, the irradiation of the pulse laser beam is superimposed on the surface of the end side range 22 of the prove pin 20 including the connection 15 linked to the free end 13 of the shoulder portion 11. Consequently, residual compression stress is imparted to the surface of the base side region 22 of the prove pin 20 to increase the fatigue strength of the surface.

By controlling the pulse laser beam irradiation spots in the pulse laser peening, a residual compression stress is applied with excellent precision to the surface of the predetermined base side region 22 of the prove pin 20 including the connection 15 linked to the end surface 13 of the shoulder portion 11. By the treatment, the base side region 22 will have an extremely small surface profile change. Namely, the prove pin 20 including the connection 15 maintains an excellent surface profile accuracy.

Further, when the pulse irradiation conditions such as the pulse energy, spot size, and the pulse irradiation number are controlled, a desired depth of the residual compression stress can be securely maintained. For example, by setting the depth H of the residual compression stress 25% of the diameter D of the prove pin 20 (H<D/4), the surface rigidity of the prove pin 20 including the connection 15 extending from the end surface 13 of the shoulder portion 11 is sufficiently obtained, and the toughness thereof can be maintained.

Here, it is preferable to set the residual compression stress imparted by the pulse laser beam irradiation, with taking into account the decrease of the strength of the rotary tool 10 for friction stir welding. The strength of the rotary tool 10 decreases when the temperature thereof increases due to the friction stir welding. For effectively preventing or restricting the buckling of the base side region 22 of the prove pin 20 and the damages of the prove pin 20 due to the friction stir welding, it is preferable to set the residual compression stress to be greater than the tensile stress in the base side region 22 of the prove pin 20 under the exposure to a maximum temperature during the friction stir welding and smaller than the compressive yield stress under the exposure to the maximum temperature.

In other words, it is preferable to control the pulse laser beam irradiation to have the residual compression stress as follows:

(tensile stress imparted under the exposure to the maximum temperature < residual compression stress < compression yield stress under the exposure to the maximum temperature)
By using the thus prepared rotary tool 10 for friction stir welding, welding workpieces W are subjected to friction stir welding at the interface Wa. For the operation, as shown in Fig. 5, the rotary tool 10 for friction stir welding is rotated at a high speed by means of a rotary drive means 1, to lower the rotary tool 10 along the axis Z.

When the prove pin 20 of the rotary tool 10 for friction stir welding arrives at the interface Wa, the welding workpieces W are heated and softened by the heat of friction between the rotating prove pin 20 and the workpieces W. Thus, the prove pin 20 is inserted to the workpieces.

Further, the prove pin 20 is inserted to the workpieces W by the level where the corner 14 of the shoulder portion 11 in the prove pin contacts the surface of the welding workpieces W. In this state where the prove pin 20 is inserted to the workpieces W, more heat generates by the friction between the rotating shoulder portion 11/the prove pin 20 and the workpieces W to further heat and soften the workpieces W. Simultaneously, the rotating prove pin 20 makes the interface Wa of the welding workpieces W plastically fluidized. Subsequently, the screw part 23a provided on the prove pin 20 stirs the thus fluidized welding workpieces W. By stirring in this way, a plastically fluidized area is formed in the interface Wa of the welding workpieces W. Under such condition, the rotary tool 10 for friction stir welding is moved along the interface Wa of the welding workpieces W in the longitudinal direction of the interface, thereby sequentially connecting the welding workpieces W at the interface Wa.

Moreover, by using the rotary tool 10 for friction stir welding, the fluidized welding workpieces W are stirred by the screw part 23a formed around the outer periphery of the prove pin 20 at the free end. Here, the screw part 23a is formed to have a reversed screw flight, with respect to the rotational direction of the rotary tool 10 for friction stir welding. Therefore, the fluidized workpieces W are further pressed by the function of the screw part 23a. The end surface 13 of the shoulder portion 11 is configured to be concaved from the outer periphery side to the center where the prove pin 20 is provided. Accordingly, the fluidized welding workpieces W are restricted to overflow the interface Wa to outer areas. Accordingly, the welding workpieces W are connected with each other uniformly at the interface Wa without void formation.

Here, the pulse laser peening is carried out with respect to the base side region 22 of the prove pin 20 including the connection 15 linked to the end surface 13 of the shoulder portion 11 by using the rotary tool 10 for friction stir welding, By the operation, residual compression stress is applied to the base side region without damaging the surface profile of the end surface 13 of the shoulder portion 11 and that of the prove pin 20 including the connection 15 linked to the end surface 13. Therefore, when the welding workpieces W is subjected to friction stir welding along the interface Wa, the welding workpieces W is protected from being adhered to the prove pin 20 or end surface 13 of the shoulder portion 11. Further, the abrasion of the prove pin 20 or the shoulder portion 11 is decreased.

Moreover, even by the repetitious application of tension and compression load stress due to the friction stir welding, the base side range 22 of the prove pin 20 including the part 15 linked to the end surface 13 of the shoulder portion 11 maintains the surface rigidity and the toughness. Further, the damages from the buckling and the thermal deformation of the shoulder portion 11 are restricted, to largely increase the durability of the prove pin 20.

To the rotary tool 10 for friction stir welding in the present embodiment, pulse laser peening was applied only to the base part region 22 of the prove pin including the connection 15 linked to the end surface 13 of the shoulder portion 11, to impart the residual stress to the base side region 22. However, it is possible to apply laser pulse peening to a broad range over the end surface 13 of the shoulder portion 11 and the outer periphery of the prove pin 20, which are to be in contact with the welding workpieces at the friction stir welding. In this case, an extremely small surface profile change takes place at the screw part 23a. Namely, it is possible to maintain the surface profile accuracy of the entire prove pin 20 including the screw part 23 a.

### Examples

Characteristic points of the rotary tool for friction stir welding as a specific embodiment will now be explained.

In the examples, pulse laser peening treatment was applied to the base side region of the prove pin including a part extending from the end surface of the shoulder potion of the rotary tool for friction stir welding. The residual compression stress of the rotary tool was measured before exposure to a high temperature and under exposure to the high temperature.

### (1) The rotary tool for friction stir welding

Shape of the rotary tool for friction stir welding: Fig. 6 is a diagram for showing an essential part of the rotary tool which includes parts corresponding to those in Fig. 3 having common reference numerals with the figure. The diameter D of the prove pin 20 extending from the center of the end surface 13 of the shoulder portion 11 is 2 mm, and the length L from the end surface 13 to an end 24 is 5 mm.
Region subjected to pulse laser peening treatment: Pulse laser peening was applied to the base side region 22 of the prove pin 20 including the connection 15 linked to the end surface 13 of the shoulder portion 11, with the rotary tool 10 for friction stir welding being rotary driven.
Materials: The materials for the rotary tool 20 for friction stir welding are shown in Table 1. The rotary tool 10 for friction stir welding is made of a steel for hot working tool having mechanical characteristics shown in Table 1, i.e., a steel for hot working tool having Young's modulus: 210,000 N/mm², tensile strength: 2,650 N/mm², 0.2% proof stress: 1,960 N/mm², elongation: 4%, reduction: 13%.
Stress condition: The rotary tool 10 for friction stir welding was rotated at a high speed and was inserted to the interface between the welding workpieces, and moved in one longitudinal direction of the interface. The rotary tool 10 repeatedly receives tension/compression load. In the rotary tool 10 for friction stir welding, tension/compression stress of about 400 MPa is applied to the base part region 22, which is a tension concentration part of the prove pin 20.
Temperature condition: On the other hand, the rotary tool 10 for friction stir welding was exposed to temperatures ranging from usual temperature to a high temperature under use. The temperature of the prove pin 20 was increased to about 400°C.

**[Table 1]**

| Mechanical Characteristics of Steel for Hot working tool | |
|---|---|
| Young's modulus | 210,000 N/mm² |
| Tensile strength | 2,650 N/mm² |
| 0.2 proof stress | 1,960 N/mm² |
| Elongation | 4% |
| Reduction | 13% |

### (2) Conditions for pulse laser peening

Requisite 1: The prove pin 20 in the rotary tool 10 for friction stir welding is exposed to a high temperature under use to have a temperature of about 400°C. Therefore, the strength of the prove pin 20 is decreased by about 30% compared to the use at room temperature. With this fact taking into account, it is necessary to impart to the prove pin 20 a residual compression stress about 30% increased, by the pulse laser peening, based on tension/compression stress of 400 MPa applied at a usual state before exposure to a high temperature. In other words, it is necessary to impart a residual compression stress of 571 MPa which is increased about 30% based on tension/compression stress of 400 MPa, or more, by the pulse laser peening.
Requisite 2: On the other hand, it is necessary to set a residual compression stress to the prove pin 20 to be the same or less, compared to the compression yield stress under exposure to a high temperature, by the pulse laser peening. Namely, it is necessary to impart a compression yield stress of 70% or less with respect to 0.2% proof stress (1,960 MPa), that is, 1,370 MPa or less of the material used for the rotary tool of Fig. 7

With the requisites 1 and 2 taking into account, pulse laser peening was carried out under conditions of Case 1 to Case 9 as shown in Table 2. The residual compression stress was measured before exposure to a high temperature and under exposure to the high temperature (400°C). These results are shown in Table 2 and Fig. 7.

**[Table 2]**

| Conditions for pulse laser peening and Results of residual stress measurement. | | | | | |
|---|---|---|---|---|---|
| | Energy mJ | Spot size mm | Irradiation pulse number pls/mm² | Residual stress | |
| | | | | Before exposure to heat σ y (MPa) | After exposure to high temperature σ y (MPa) |
| Case 1 | 10 | 0.2 | 180 | -1142.7 | -957.5 |
| Case 2 | 10 | 0.2 | 360 | -1453.4 | -1151.6 |
| Case 3 | 10 | 0.2 | 540 | -1530.2 | -1179.7 |
| Case 4 | 20 | 0.3 | 90 | -712.2 | -647.2 |
| Case 5 | 20 | 0.3 | 180 | -989.6 | -826.4 |
| Case 6 | 20 | 0.3 | 270 | -991.8 | -866.3 |
| Case 7 | 30 | 0.35 | 60 | -727.8 | -621.4 |
| Case 8 | 30 | 0.35 | 120 | -1228 | -1002.1 |
| Case 9 | 30 | 0.35 | 180 | -1433.9 | -1112.9 |

From the above results, it is possible to confirm that the above-mentioned requisites 1 and 2 are satisfied under the conditions for Case 1: pulse energy: 10 mJ, spot size: 0.2 mm, and pulse irradiation number: 180 pls/mm².
Likewise, it is possible to confirm that the above-mentioned requisites 1 and 2 are satisfied under the conditions for Case 4 to Case 6: pulse energy 20 mJ, spot size: 0.3 mm, and pulse irradiation number: 90 pls/mm² , 180 pls/mm², and 270 pls/mm².
Moreover, it is possible to confirm that the above-mentioned requisites 1 and 2 are satisfied under the conditions for Case 7 and Case 8: pulse energy 35 mJ, spot size: 0.35 mm, pulse irradiation number: 60 pls/mm² and 120 pls/mm².

From Tables 1 and 2, it is possible to confirm that the above-mentioned requisites 1 and 2 are satisfied under the following pulse laser peening conditions, and that excellent residual compression stress is imparted by the following pulse laser peening conditions:

When the pulse energy is 10 mJ, spot size of 0.2 mm and pulse irradiation number of 180 pls/mm² ,
when the pulse energy is 20 mJ, spot size of 0.3 mm and pulse irradiation number of 90 to 270 pls/mm²,
when pulse energy is 30 mJ, spot size of 0.35 mm and pulse irradiation number of 60 to 120 pls/mm²

### (3) Evaluation of rotary tool for friction stir welding

After using the rotary tool for friction stir welding to which the pulse laser peening has been applied under the conditions of Cases 1 and 4 to 8, the following evaluation was made. Therein, it was confirmed that the prove pin 20 was not broken or damaged, and the connectable distance was 2 times longer, with excellent friction stir joint characteristics being maintained.
By using the rotary tool for friction stir welding to which the pulse laser peening been applied under the conditions of Cases 1 and 4 to 8, friction stir welding was carried out. Thereafter, tensile test and the fatigue test were carried out and it was confirmed that that the strength and the fatigue cycle were satisfactory.
After performing friction stir welding over desired distance, it was confirmed that the prove pin 20 was not broken or damages.

### Explanation of Reference Numerals

- 10: Rotary tool for friction stir welding
- 11: shoulder portion
- 12: outer periphery
- 13: end surface
- 15: connection
- 20: prove pin
- 22: base side region
- 23: free end side region
- 24: end
- W: welding workpieces
- Wa: interface

## Claims

1. A rotary tool for friction stir welding comprising:
a shoulder portion, and
a prove pin protruded from an end surface of the shoulder portion, the prove pin having a screw part around the outer periphery at the side of the free end, the shoulder portion being rotated, and the prove pin being pressed into an interface between workpieces to be welded to each other, the prove pin moved along the interface, and the workpieces to be welded being subjected to friction stir welding at the interface,
**characterized in that** the outer periphery of the prove pin has been treated by pulse laser peening.

2. The rotary tool for friction stir welding as claimed in Claim 1, **characterized in that** the outer periphery of the prove pin has a connection linked to the end surface of the shoulder portion, the pulse laser peening has been applied to a base side region extending from the connection to the screw part.

3. The rotary tool for friction stir welding as claimed in Claim 1 or 2, **characterized in that** the pulse laser peening imparts a residual compression stress to the base side region of the prove pin, which is greater than the tensile stress applied to the rotary tool for friction stir welding at a maximum temperature during the use and is smaller than the compressive yield stress of the material for the rotary tool at the maximum temperature.
